# EUROPÄISCHE PATENTSCHRIFT

(11) **EP 2 828 714 B1**
(45) Veröffentlichungstag und Bekanntmachung des Hinweises auf die Patenterteilung: **14.08.2019**
(21) Anmeldenummer: 13708371.3
(22) Anmeldetag: 22.02.2013
(51) Int. Cl.: G05B 19/042

(54) **VERFAHREN ZUM DRAHTLOSEN BEDIENEN EINES FELDGERÄTES**
METHOD FOR THE WIRELESS OPERATION OF A FIELD DEVICE
PROCÉDÉ DE COMMANDE SANS FIL D'UN APPAREIL DE TERRAIN

(30) Priorität: 23.03.2012 DE 102012102516
(43) Veröffentlichungstag der Anmeldung: 28.01.2015
(73) Patentinhaber: Endress+Hauser SE+Co. KG, 79689 Maulburg (DE)
(72) Erfinder: BARET, Marc, F-68680 Kembs (FR); BIRGEL, Eric, 79650 Schopfheim (DE); FISCHER, Julien, F-68300 Saint Louis (FR); LEFEBVRE, Martine, F-68730 Blotzheim (FR); SEGER, Andrea, 79669 Zell (DE); WEIBEL, Mathieu, 46143 Greenwood, IN (US)
(74) Vertreter: Andres, Angelika Maria
(86) Internationale Anmeldenummer: PCT/EP2013/053574
(87) Internationale Veröffentlichungsnummer: WO 2013/139556

(56) Entgegenhaltungen:
- EP-A1- 1 293 853
- US-A1- 2008 268 784
- US-A1- 2010 145 476
- US-B1- 6 574 234

## Beschreibung

Die Erfindung bezieht sich auf ein Verfahren zum Bedienen eines Feldgerätes. Ferner bezieht sich die Erfindung auf eine Anordnung zum Durchführen des Verfahrens umfassend einen Adapter, ein Bediengerät und ein Feldgerät, sowie auf einen Adapter, ein Bediengerät und ein Feldgerät im Einzelnen.

Aus dem Stand der Technik ist es bekannt geworden, das Gehäuse eines Feldgerätes mit einem RFID-Datenträger zu versehen, so dass auf dem RFID-Datenträger gespeicherte Informationen berührungslos abrufbar sind. Ferner ist es aus der DE 102008008072 A1 bekannt geworden, diesen RFID-Datenträger mit einer internen Elektronikeinheit des Feldgerätes zu verbinden, so dass Signale von dem RFID-Datenträger dem Feldgerät intern bereitgestellt werden können. Zu diesem Zweck kann der RFID-Datenträger beschreibbar sein.

US 2010/145476 A1 offenbart einen tragbaren Kommunikator zur Verwendung in einem Prozesssteuerungssystem der über einen Prozessor verfügt, der eine im Speicher gespeicherte Softwareanwendung zum Senden oder Empfangen von Daten zu oder von Feldgeräten über die Kommunikationsschnittstelle ausführt.

Ferner ist auch aus der DE 202006012632 U1 die Verwendung von RFID-Transpondern als Zugangskontrolle zu einer Maschine bekannt geworden.

Zur drahtlosen Datenübertragung sind darüber hinaus verschiedene Standards geschaffen worden. So kann bspw. über magnetische Felder eine induktive Kopplung oder Nahfeldkopplung (NFC) erfolgen. Die Datenübertragung und oftmals auch die Energieversorgung erfolgt dabei über ein magnetisches Nahfeld, das durch Spulen in einem Lesegerät und in einem sog. Tag vermittelt wird. Die Frequenzen, die bei einer solchen Übertragung verwendet werden, liegen bei 135 kHz, 13,56 MHz und sind durch die Normen ISO 18000-2 und ISO 18000-3 bzw. ISO 22536 vorgegeben. Ferner ist es bekannt geworden, elektromagnetische Dipolfelder zur Fernkopplung zu nutzen. Hier erfolgt die Datenübertragung und oft auch die Energieversorgung über Antennen, bspw. Dipolantennen oder Spiralantennen. Die Frequenzen bei denen diese Kopplung erfolgt liegen bei 433 MHz, 868 MHz und 2,45 GHz, welche durch die Normen ISO 18000-7, ISO18000-6 bzw. ISO 18000-4 vorgegeben sind.

Das herkömmliche NFC-Kommunikationsverfahren bietet jedoch den Nachteil, dass es für eine dauerhafte Datenübertragung, wie sie bspw. bei einer Parametrierung eines Feldgerätes der Prozess- und/oder Automatisierungstechnik über ein Software-Tool für die Feldgerätekonfiguration erfolgt, zu leistungsintensiv ist.

Ferner ist es bei den heutzutage bekannten Feldbussystemen insbesondere in dem Fall, dass eine große Anzahl an Feldgeräten an den Feldbus angeschlossen sind sehr zeitaufwändig, feldgerätespezifische Angaben, wie bspw. die Feldbusadressen der Feldgeräte bspw. durch ein Bediengerät abzufragen, das an den Feldbus angeschlossen wird. Besonders wenn mehrere Feldgeräte des gleichen Typs an einen Feldbus angeschlossen sind, ist es für einen Benutzer u.U. schwierig, das richtige Gerät auszuwählen.

Der Erfindung liegt die Aufgabe zugrunde, einen einfachen und schnellen Zugriff auf ein an einen Feldbus angeschlossenes Feldgerät über den Feldbus zu ermöglichen.

Die Aufgabe wird erfindungsgemäß durch ein Verfahren gem. Anspruch 1 gelöst.

Wie bereits erwähnt, sind aus dem Stand der Technik Feldgeräte mit einem drahtlosen Übertragungsmodul bekannt geworden. Erfindungsgemäß ist vorgesehen, einen Adapter mit einem korrespondierenden zweiten drahtlosen Übertragungsmodul auszustatten. Mittels dieses Adapters werden Daten aus der Speichereinheit des Feldgerätes abgerufen und an den Adapter übertragen. Der Adapter wird anschließend mit dem Bediengerät verbunden und das Bediengerät stellt eine Verbindung zu dem Feldgerät anhand dieser abgerufenen Daten her.

Bei dem Übertragungsmodul des Adapters handelt es sich beispielsweise um ein Lesegerät zum Abfragen eines in dem Feldgerät vorgesehenen Transponders. Zum Bedienen des Feldgerätes kann, mittels des vorgeschlagenen Adapters somit auf einfache Weise eine Verbindung zu dem Feldgerät, mittels des Bediengerätes und des Adapters hergestellt werden. Ein Benutzer kann durch den Adapter vor Ort in einer Anlage der Prozessautomatisierungstechnik Daten von dem Feldgerät abrufen und anhand dieser abgerufenen Daten eine Verbindung zu dem Feldgerät über den Feldbus herstellen.

Vorzugsweise handelt es sich bei den aus Speichereinheit abgerufenen Daten um die Feldbusadresse des Feldgerätes. Zur Kommunikation über den Feldbus verfügt das Feldgerät über eine erste Kommunikationsschnittstelle und der Adapter verfügt über eine zweite Kommunikationsschnittstelle zur Kommunikation über den Feldbus. Zum Verbinden des Adapters mit dem Bediengerät kann eine weitere Schnittstelle vorgesehen sein, über die der Adapter mit dem Bediengerät verbunden wird.

In einer Ausführungsform des Verfahrens handelt es sich bei dem aus der Speichereinheit abgerufenen Daten, um eine oder mehrere Daten der folgenden Art: die Firmwareversion des Feldgerätes, die Seriennummer des Feldgerätes, die Bestellnummer des Feldgerätes, den Kennsatz des Feldgerätes, die Version der sog. Elektronic-Name-Plate des Feldgerätes, den Typ des Feldbusses, und/oder die Version der Gerätebeschreibung des Feldgerätes. Anhand wenigstens einer dieser Daten kann das Bediengerät eine Verbindung zu dem Feldgerät herstellen und/oder die Bedienung des Feldgerätes durchgeführt werden.

In einer weiteren Ausführungsform des Verfahrens werden beim Starten des Feldgerätes oder bei einer Änderung der vorgenannten Daten diese Daten in die Speichereinheit des Feldgerätes geschrieben. Somit steht stets eine aktuelle Version dieser Daten in der Speichereinheit des Feldgerätes zur Verfügung und kann über das erste drahtlose Übertragungsmodul an den Adapter übertragen werden.

Gemäß einer weiteren Ausführungsform des Verfahrens wird das Feldgerät an den Feldbus angeschlossen, und nach dem Anschließen an den Feldbus gestartet. Nachdem das Feldgerät an den Feldbus angeschlossen wurde und nachdem das Feldgerät mit elektrischer Energie, bspw. über den Feldbus, versorgt wird, wird die Feldbusadresse oder Daten eines anderen vorgenannten Typs in die Speichereinheit des Feldgerätes geschrieben. Das Anschließen des Feldgerätes an den Feldbus und die anschließende Stromversorgung des Feldgerätes wird in Zusammenhang mit der vorliegenden Erfindung auch als Starten bezeichnet. Die Feldbusadresse eines Feldgerätes kann bereits vor dem Anschließen des Feldgerätes mittels so genannter DIP-Schalter an dem Feldgerät eingestellt werden. Diese DIP-Schalter sind allerdings oftmals nur unterhalb einer Verkleidung, d. h. innerhalb des Gehäuses des Feldgerätes angeordnet. Nach dem Starten des Feldgerätes kann diese Feldbusadresse in die Speichereinheit geschrieben werden. Ferner kann die Feldbusadresse eines Feldgerätes auch von einer übergeordneten Einheit vergeben werden. In diesem Fall erhält das Feldgerät seine Feldbusadresse erst nach dem Anschließen des Feldgerätes an den Feldbus.

In einer Ausführungsform des Verfahrens sind mehrere Feldgerätes des gleichen Typs an den Feldbus angeschlossen, wobei diese Feldgeräte jeweils unterschiedliche Feldbusadressen aufweisen. Unter Feldgeräten des gleichen Typs werden dabei Feldgeräte verstanden, die beispielsweise, dieselbe Messgröße aufnehmen, dasselbe Messprinzip zum Aufnehmen dieser Messgröße nutzen, über dieselbe elektronische Ausstattung verfügen, und/oder über die gleiche Bezeichnung verfügen. Da derartige Feldgeräte des gleichen Typs über den Feldbus und ein Bediengerät nur schwer von einander zu unterscheiden sind, stellt die vorliegende Erfindung eine wesentliche Erleichterung beim Bedienen eines Feldgerätes vor Ort in einer Anlage der Prozessautomatisierungstechnik dar.

In einer weiteren Ausführungsform des vorgeschlagenen Verfahrens werden die Daten aus der Speichereinheit des Feldgerätes mittels des Adapters vor Ort in unmittelbarer Nähe des Feldgerätes über das erste Übertragungsmoduls des Feldgerätes und über das zweite Übertragungsmodul des Adapters drahtlos abgerufen und an den Adapter übertragen. Um ein Feldgerät zu bedienen, muss ein Benutzer sich also nur noch vor Ort in die unmittelbare Nähe des Feldgerätes begeben. Über den Adapter können dann beispielsweise die Daten aus der Speichereinheit automatisch an den Adapter übertragen werden. Der Benutzer muss den Adapter dann nur noch mit dem Bediengerät verbinden und so eine Verbindung mit dem Feldgerät herstellen. Bei dem Bediengerät kann es sich beispielsweise um eine Recheneinheit, wie bspw. einen PC, handeln. Ferner kann zum Bedienen ein Bedienprogramm wie beispielsweise, dass von der Anmelderin vertriebene Programm Fieldcare verwendet werden.

In einer Ausführungsform des Verfahrens weist das Feldgerät einen Mikroprozessor auf, über den auf die Speichereinheit zurückgegriffen werden kann. Ferner kann auch das erste Übertragungsmodul des Feldgerätes einen Mikroprozessor aufweisen, über den auch auf die Speichereinheit des Feldgerätes zugegriffen werden kann. Es wird somit vorgeschlagen, eine Speichereinheit in dem Feldgerät vorzusehen, auf die sowohl von der Betriebselektronik als auch von dem ersten Übertragungsmodul, vorzugsweise abwechselnd, zugegriffen werden kann. Der Zugriff von dem ersten Übertragungsmodul auf die Speichereinheit kann sowohl durch eine Energieversorgung des Feldgerätes als auch durch eine Energieversorgung über das erste Übertragungsmodul erreicht werden. Im letzteren Fall wird die Energieversorgung dann bspw. aus der Funkverbindung zwischen dem ersten und dem zweiten Übertragungsmodul gewonnen.

In einer weiteren Ausführungsform des Verfahrens handelt es sich bei dem ersten drahtlosen Übertragungsmodul um ein passives Übertragungsmodul, das durch ein elektrisches und/oder magnetisches Feld, welches durch das zweite Übertragungsmodul aufgebaut wird, abgefragt wird. Bei dem zweiten Übertragungsmodul handelt es sich beispielsweise, um ein Lesegerät zum Abfragen des ersten Übertragungsmoduls. Andererseits kann auch der umgekehrte Aufbau vorgesehen sein, bei dem es sich bei dem ersten drahtlosen Übertragungsmodul um ein Lesegerät zum Abfragen des zweiten Übertragungsmoduls handelt.

Gemäß einer weiteren Ausführungsform des Verfahrens handelt es sich bei dem ersten und dem korrespondierenden zweiten Übertragungsmodul um ein, gemäß dem RFID-Standard und/oder dem NFC-Standard arbeitende Übertragungsmodule. Es hat sich nämlich herausgestellt, dass insbesondere der abwechselnde Betrieb gemäß dem RFID- und dem NFC-Standard zu einer besonders energiesparenden Übertragung zwischen zwei Kommunikationspartnern verwendet werden kann. In einer weiteren Ausführungsform des Verfahrens werden die aus der Speichereinheit des Feldgerätes an den Adapter übertragenen Daten nach dem Anschließen des Adapters an das Feldgerät an das Bediengerät übertragen. Zu diesem Zweck kann, wie bereits erwähnt, eine zusätzliche Kommunikationsschnittstelle an dem Adapter zur Kommunikation mit dem Bediengerät vorgesehen sein. Bei dem Adapter handelt es sich bevorzugt um ein so genanntes Feldbusmodem, dass einerseits an dem Feldbus und andererseits an ein Bediengerät angeschlossen werden kann.

Die Aufgabe wird ferner durch einen Adapter zum Durchführen des Verfahrens nach einer der vorhergehenden Ausführungsformen gelöst.

Die Aufgabe wird ferner durch ein Bediengerät zum Durchführen des Verfahrens nach einer der vorhergehenden Ausführungsformen gelöst.

Die Aufgabe wird auch durch ein Feldgerät zum Durchführen des Verfahrens nach einer der vorgenannten Ausführungsformen gelöst.

Die Aufgabe wird ferner durch eine Anordnung, umfassend ein Adapter, ein Bediengerät und ein Feldgerät zur Durchführung des Verfahrens nach einer der vorgenannten Ausführungsformen gelöst.

Die Aufgabe wird anhand der nachfolgenden Zeichnung näher erläutert. Es zeigt,
Die Erfindung wird anhand der nachfolgenden Zeichnungen näher erläutert. Es zeigt:
Fig. 1: eine schematische Darstellung einer Anordnung umfassend ein Feldgerät, eine Bediengerät und einen Adapter zur Durchführung des vorgeschlagenen Verfahrens,
Fig. 2: eine beispielhafte Liste von Teilnehmern eines Feldbusses in einer Anlage der Prozessautomatisierungstechnik.

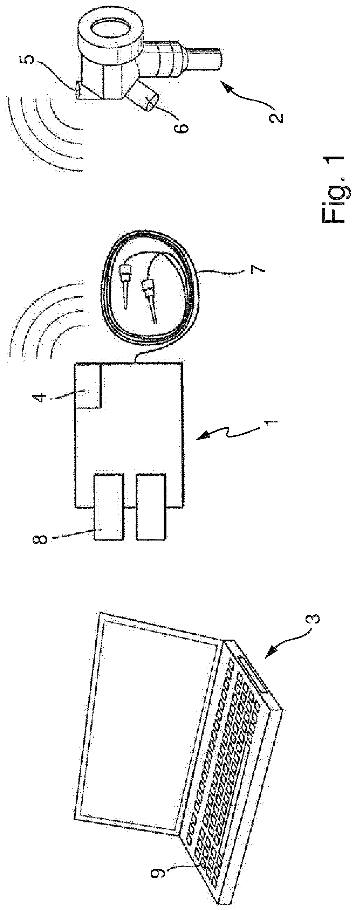

Figur 1 zeigt eine schematische Darstellung eines Feldgerätes 2 mit einem ersten drahtlosen Übertragungsmodul 5. Die drahtlose Funkübertragung ist dabei durch die Kreisbögen am Feldgerät 2 bzw. am Adapter 1 versinnbildlicht. Bei dem Feldgerät 2 handelt es sich bspw. um einen Sensor, einen Aktor oder eine Anzeige-/Bedieneinheit. Das Feldgerät ist mit dem Feldbus, nicht gezeigt, verbunden. Für die Verbindung mit dem Feldbus weist das Feldgerät 2 einen Kabelanschluss 6 auf, an den ein Kabel anschließbar ist, um das Feldgerät 2 mit dem Feldbus zu verbinden.

Der Adapter 1 weist ein zweites Übertragungsmodul 4 auf, über das auf die in einer Speichereinheit, nicht gezeigt, des Feldgerätes 2 gespeicherten Daten abgerufen werden können. Zu diesem Zweck begibt sich ein Benutzer vor Ort in der Anlage in die Nähe des Feldgerätes 2, so dass über die Funkverbindung zwischen dem ersten und dem zweiten Übertragungsmodul 4, 5 Daten ausgetauscht werden können. Bei dem Adapter 1 handelt es sich um ein sog. Feldbus-Modem, das primär zu einer Kommunikation über den Feldbus dient. Das zweite Übertragungsmodul 5 ist in das Feldbus-Modem integriert, so dass das Feldbus-Modem einen Datenaustausch direkt zwischen dem Feldbus-Modem und dem Feldgerät ermöglicht.

Nachdem die Daten aus der Speichereinheit des Feldgerätes 2 an das als Adapter 1 fungierende Feldbus-Modem übertragen wurden, kann das Feldbus-Modem mit dem Bediengerät 9, in diesem Fall einem tragbaren Computer, verbunden werden. Alternativ kann das Feldbus-Modem 1 auch schon mit dem Bediengerät 9 zu dem Zeitpunkt, zu dem die Daten aus der Speichereinheit des Feldgerätes 2 abgerufen werden, verbunden sein. Das Feldbus-Modem kann bspw. in eine Aufnahme 3, wie bspw. einen sog. Slot des Computers, gesteckt werden. Über eine Kabelverbindung 7 kann das Feldbus-Modem dann mit dem Feldbus, nicht gezeigt, verbunden werden und das Feldgerät 2 über den Feldbus durch das Bediengerät 9 bedient werden. Dazu werden die aus der Speichereinheit des Feldgerätes 2 über die Funkverbindung übertragenen Daten genutzt. Bei diesen Daten handelt es sich bevorzugt um die Feldbusadresse des Feldgerätes 2.

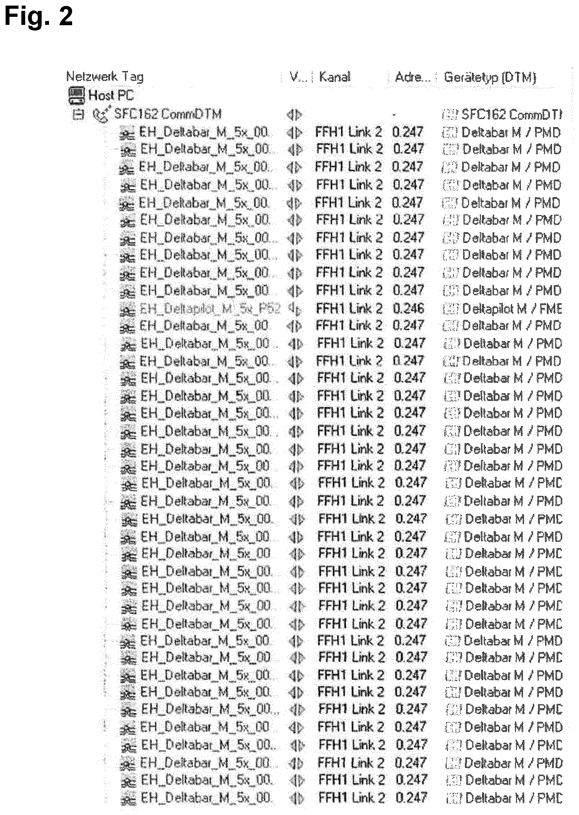

Figur 2 zeigt eine Liste von Teilnehmern eines Feldbusses. Über einen derartigen Feldbus sind mehrere Teilnehmer in einer industriellen Anlage miteinander verbunden und tauschen untereinander und/oder mit einer übergeordneten Steuereinheit, die zur Steuerung des in der Anlage ablaufenden Prozesses dient, Daten aus. Wie anhand der Liste erkennbar, ist es oftmals der Fall, dass mehrere Feldgeräte des gleichen Typs in einer industriellen Anlage vorhanden und über einen Feldbus miteinander verbunden sind. Im vorliegenden Fall handelt es sich bei den Feldgeräten des gleichen Typs um Druckmessgeräte des Typs Deltabar M.

Beim Starten des Feldgerätes werden Parameter wie die Seriennummer, die Bestellnummer, der PD-Tag, die Geräte-ID und die Geräte-Revision usw. in die Speichereinheit, bei der sich um ein FRAM handelt kann, geschrieben. Das Starten erfolgt in der Regel nach dem Anschließen des Feldgerätes an den Feldbus, da Feldgeräte üblicherweise, wie auch im vorliegenden Fall, über den Feldbus mit Energie versorgt werden. Diese in die Speichereinheit geschriebenen Parameter dienen mitunter zur eindeutigen Identifikation eines Feldgerätes auf dem Feldbus. Das Problem ist, dass das Scannen von Geräten auf dem Feldbus sehr zeitintensiv ist, da für jedes Feldgerät erst die Feldgerätedaten gelesen werden müssen, um diese im Netzwerk anzuzeigen. Dieser Feldbuscan muss auch dann durchgeführt werden, wenn man mit einem Bedienprogramm wie z.B. FieldCare nur ein Gerät von 32 parametrieren möchte, aber die Feldgeräteadresse nicht kennt. Es liegt also u.U. eine sehr unübersichtliche Netzwerkliste, welche die Adressen der Feldgeräte enthält, wie sie in Figur 2 dargestellt ist, in der man einige Zeit suchen muss, um ein bestimmtes Feldgerät zu finden. Dieses Problem wurde durch die vorgeschlagene Erfindung gelöst, indem ein RFID-TAG in ein Feldgerät integriert wird.

Ein Feldbus-Modem mit integriertem RFID-Lesegerät kann automatisch ein Feldgerät identifizieren, sobald es in die Nähe von dem Feldgerät und in die Reichweite der Funkübertragung kommt und somit die Adresse, den Kanal und/oder den Feldbus-Tag des Feldgerätes auslesen. Mit Hilfe dieser Daten entfällt der Scan des Feldbusses. Das Verfahren ist somit bei einem Serviceeinsatz von großem Vorteil. Eine Verbindung zu einem Feldgerät kann somit auf einfache Weise aufgebaut werden und die Zeit für das Scannen oder das manuelle Auswählen des richtigen DTM's somit eingespart werden.

### Bezugszeichenliste

- 1: Adapter (Feldbus-Modem)
- 2: Feldgerät
- 3: Aufnahme für Adapter (Feldbus-Modem)
- 4: zweites Übertragungsmodul
- 5: erstes Übertragungsmodul
- 6: Kabelanschluss für Feldbusverbindung
- 7: Kabelanschluss für Feldbusverbindung
- 8: Steckkontakte
- 9: Bediengerät

## Patentansprüche

1. Verfahren zum Bedienen eines Feldgerätes (2) mit einem Bediengerät (9), wobei das Feldgerät (2) über ein erstes drahtloses Übertragungsmodul (5)verfügt, wobei ein Adapter (1) vorgesehen ist, der über ein korrespondierendes zweites drahtloses Übertragungsmodul (4) verfügt,
wobei das Feldgerät (2) ferner über eine erste Kommunikationsschnittstelle (6) zur Kommunikation über einen, drahtgebundenen Feldbus verfügt, und
wobei der Adapter (1) über eine zweite Kommunikationsschnittstelle (7) ebenfalls zur Kommunikation über den drahtgebundenen Feldbus verfügt, umfassend:
- Drahtloses Abrufen von in einer Speichereinheit des Feldgerätes (2) gespeicherten Daten vermittels des ersten Übertragungsmoduls (5) und vermittels des zweiten Übertragungsmoduls (4),
- Übertragen der Daten an den Adapter (1) vermittels des ersten Übertragungsmoduls (5) und vermittels des zweiten Übertragungsmoduls (4),
- Verbinden des Adapters (1) mit dem Bediengerät (9), und
- Herstellen einer Verbindung zwischen dem Feldgerät (2) und dem Bediengerät (9) über den Feldbus vermittels der abgerufenen Daten.

2. Verfahren nach Anspruch 1,
wobei es sich bei den aus der Speichereinheit abgerufenen Daten um die Feldbusadresse des Feldgerätes (2) handelt.

3. Verfahren nach einem der vorherigen Ansprüche,
wobei es sich bei den aus der Speichereinheit abgerufenen Daten um eine oder mehrere Daten der folgen Art handelt:
- die Firmware-Version des Feldgerätes,
- die Seriennummer des Feldgerätes
- die Bestellnummer des Feldgerätes
- der Kennsatz (engl.: tag) des Feldgerätes
- die Version der Electronic-Name-Plate des Feldgerätes
- den Typ des Feldbusses
- die Version der Gerätebeschreibung des Feldgerätes.

4. Verfahren nach Anspruch 2 oder 3,
wobei die Daten gemäß Anspruch 2 oder Anspruch 3 bei dem Starten des Feldgerätes (2) oder bei einer Änderung der Daten gem. Anspruch 2 oder 3 in die Speichereinheit des Feldgerätes (2) geschrieben werden.

5. Verfahren nach einem der vorherigen Ansprüche,
wobei das Feldgerät (2) an den Feldbus angeschlossen wird, und
wobei das Feldgerät nach dem Anschließen des Feldgerätes (2) an den Feldbus gestartet wird,
wobei nach dem Starten des Feldgerätes (2) die Feldbusadresse des Feldgerätes (2) in die Speichereinheit des Feldgerätes (2) geschrieben wird.

6. Verfahren nach einem der vorherigen Ansprüche,
wobei mehrere Feldgeräte des gleichen Typs an den Feldbus angeschlossen werden, welche Feldgeräte jeweils unterschiedliche Feldbusadressen aufweisen.

7. Verfahren nach einem der vorherigen Ansprüche,
wobei die Daten aus der Speichereinheit des Feldgerätes (2) vermittels des Adapters (1) in unmittelbarer Nähe des Feldgerätes (2) über das erste und das zweiten Übertragungsmodul (5, 4) drahtlos abgerufen und übertragen werden.

8. Verfahren nach einem der vorherigen Ansprüche,
wobei auf die Speichereinheit einerseits über einen Mikroprozessor einer Betriebselektronik des Feldgerätes (2) und andererseits über einen Mikroprozessor des ersten Übertragungsmoduls (5) des Feldgerätes (2), vorzugsweise abwechselnd, zugegriffen wird.

9. Verfahren nach einem der vorherigen Ansprüche,
wobei es sich bei dem ersten drahtlosen Übertragungsmodul (5) um ein passives Übertragunsmodul handelt, das durch ein elektrisches und/oder magnetisches Feld, welches durch das zweite Übertragungsmodul (4) aufgebaut wird, bei welchem zweiten Übertragunsmodul (4) es sich um ein Lesegerät zum Abfragen des ersten Übertragungsmoduls (5) handelt, abgefragt wird.

10. Verfahren nach einem der vorherigen Ansprüche,
wobei es sich bei dem ersten und dem korrespondierenden zweiten Übertragungsmodul (5, 4) um ein gem. dem RFID-Standard und/oder NFC-Standard arbeitende Übertragungsmodule handelt.

11. Verfahren nach einem der vorherigen Ansprüche,
wobei die aus der Speichereinheit an den Adapter (1) übertragenen Daten nach dem Anschließen des Adapters (1) an das Bediengerät (9) an das Bediengerät (9) übertragen werden, wobei zu diesem Zweck vorzugsweise eine zusätzliche Kommunikationsschnittstelle (8) an dem Adapter (1) zur Kommunikation mit dem Bediengerät (9) vorgesehen ist.

## Claims

1. Procedure for the operation of a field device (2) with a control unit (9), wherein the field device (2) has a first wireless transmission module (5), wherein an adapter (1) is provided which has a corresponding second wireless transmission module (4),
wherein the field device (2) further has a first communication interface (6) for communication via a wired field device, and
wherein the adapter (1) has a second communication interface (7) also for communication via the wired field device, wherein said procedure comprises:
- Wireless calling of data saved in a memory unit of the field device (2) by means of the first transmission module (5) and by means of the second transmission module (4),
- Transmission of the data to the adapter (1) by means of the first transmission module (5) and by means of the second transmission module (4),
- Connection of the adapter (1) to the control unit (9), and
- Establishment of a connection between the field device (2) and the control unit (9) via the fieldbus by means of the data that are called up.

2. Procedure as claimed in Claim 1,
wherein the data called from the memory unit constitute the fieldbus address of the field device (2).

3. Procedure as claimed in one of the previous claims,
wherein the data called from the memory unit constitute one or more items of data of the following type:
- the firmware version of the field device
- the serial number of the field device
- the order number of the field device
- the tag of the field device
- the version of the electronic nameplate of the field device
- the type of the fieldbus
- the version of the device description of the field device.

4. Procedure as claimed in Claim 2 or 3,
wherein the data as claimed in Claim 2 or 3 are written to the memory unit of the field device (2) when the field device is started (2) or in the event of a change to the data as claimed in Claim 2 or 3.

5. Procedure as claimed in one of the previous claims,
wherein the field device (2) is connected to the fieldbus, and wherein the field device is started after the field device (2) is connected to the fieldbus,
wherein the fieldbus address of the field device (2) is written to the memory unit of the field device (2) after the field device (2) is started.

6. Procedure as claimed in one of the previous claims,
wherein several field devices of the same type are connected to the fieldbus, said field devices having different fieldbus addresses.

7. Procedure as claimed in one of the previous claims,
wherein the data from the memory unit of the field device (2) are called up and transmitted wirelessly by means of the adapter (1) in the direct vicinity of the field device (2) via the first and the second transmission module (5, 4).

8. Procedure as claimed in one of the previous claims,
wherein the memory unit is accessed, preferably alternately, on the one hand via a microprocessor of an operating electronics module of the field device (2) and on the other hand via a microprocessor of the first transmission module (5) of the field device (2).

9. Procedure as claimed in one of the previous claims,
wherein the first wireless transmission module (5) is a passive transmission module which is interrogated by an electrical and/or magnetic field, which is created by the second transmission module (4),
wherein said second transmission module (4) is a reader designed to interrogate the first transmission module (5).

10. Procedure as claimed in one of the previous claims,
wherein the first and the corresponding second transmission module (5, 4) is a transmission module that operates according to the RFID standard and/or NFC standard.

11. Procedure as claimed in one of the previous claims,
wherein the data transmitted from the memory unit to the adapter (1) are transmitted to the control unit (9) after the adapter is connected to the control unit (9), wherein, for this purpose, an additional communication interface (8) is preferably provided on the adapter (1) for communication with the control unit (9).

## Revendications

1. Procédé destiné à l'exploitation d'un appareil de terrain (2) avec un appareil de commande (9), pour lequel l'appareil de terrain (2) dispose premier d'un module de transmission sans fil (5), un adaptateur (1) étant prévu, lequel dispose d'un deuxième module de transmission sans fil (4) correspondant,
pour lequel l'appareil de terrain (2) dispose en outre d'une première interface de communication (6) pour la communication via un appareil de terrain câblé, et pour lequel l'adaptateur (1) dispose d'une deuxième interface de communication (7) également pour la communication via l'appareil de terrain câblé, lequel procédé comprend :
- Appel sans fil de données enregistrées dans une unité de mémoire de l'appareil de terrain (2) par l'intermédiaire du premier module de transmission (5) et par l'intermédiaire du deuxième module de transmission (4),
- Transmission des données à l'adaptateur (1) par l'intermédiaire du premier module de transmission (5) et au moyen du deuxième module de transmission (4),
- Raccordement de l'adaptateur (1) à l'appareil de commande (9), et
- Établissement d'une connexion entre l'appareil de terrain (2) et l'appareil de commande (9) via le bus de terrain par l'intermédiaire des données appelées.

2. Procédé selon la revendication 1,
pour lequel il s'agit, concernant les données appelées à partir de l'unité de mémoire, de l'adresse de bus de terrain de l'appareil de terrain (2).

3. Procédé selon l'une des revendications précédentes,
pour lequel il s'agit, concernant les données appelées à partir de l'unité de mémoire, d'une donnée ou de plusieurs données du type suivant :
- la version du firmware de l'appareil de terrain
- le numéro de série de l'appareil de terrain
- le numéro de commande de l'appareil de terrain
- le numéro de tag de l'appareil de terrain
- la version de la plaque signalétique électronique de l'appareil de terrain
- le type du bus de terrain
- la version de la description de l'appareil de terrain.

4. Procédé selon la revendication 2 ou 3,
pour lequel les données sont écrites dans l'unité de mémoire de l'appareil de terrain (2) selon la revendication 2 ou la revendication 3 au démarrage de l'appareil de terrain (2) ou en cas de modification des données selon la revendication 2 ou 3.

5. Procédé selon l'une des revendications précédentes,
pour lequel l'appareil de terrain (2) est raccordé au bus de terrain, et pour lequel l'appareil de terrain est démarré après le raccordement de l'appareil de terrain (2) au bus de terrain,
pour lequel, après le démarrage de l'appareil de terrain (2), l'adresse de bus de terrain de l'appareil de terrain (2) est écrite dans l'unité de mémoire de l'appareil de terrain (2).

6. Procédé selon l'une des revendications précédentes,
pour lequel plusieurs appareils de terrain de même type sont raccordés au bus de terrain, lesquels appareils de terrain présentent différentes adresses de bus de terrain.

7. Procédé selon l'une des revendications précédentes,
pour lequel les données issues de l'unité de mémoire de l'appareil de terrain (2) sont appelées et transmises sans fil par l'intermédiaire de l'adaptateur (1) à proximité immédiate de l'appareil de terrain (2) via le premier et le deuxième module de transmission (5, 4).

8. Procédé selon l'une des revendications précédentes,
pour lequel s'effectue un accès, de préférence alterné, à l'unité de mémoire, d'une part via un microprocesseur d'une électronique d'exploitation de l'appareil de terrain (2) et, d'autre part, via un microprocesseur du premier module de transmission (5) de l'appareil de terrain (2).

9. Procédé selon l'une des revendications précédentes,
pour lequel il s'agit, concernant le premier module de transmission sans fil (5), d'un module de transmission passif, qui est interrogé via un champ électrique et/ou magnétique, lequel champ est établi par le deuxième module de transmission sans fil (4),
pour lequel il s'agit, concernant le deuxième module de transmission sans fil (4), d'un appareil de lecture destiné à l'interrogation du premier module de transmission sans fil (5).

10. Procédé selon l'une des revendications précédentes,
pour lequel il s'agit, concernant le premier et le deuxième module de transmission (5, 4) correspondant, de modules de transmission fonctionnant selon le standard RFID et/ou de modules de transmission fonctionnant selon le standard NFC.

11. Procédé selon l'une des revendications précédentes,
pour lequel les données transmises à l'adaptateur (1) à partir de l'unité de mémoire après le raccordement de l'adaptateur (1) à l'appareil de commande (9) sont transmises à l'appareil de commande (9), une interface de communication (8) supplémentaire étant prévue de préférence à cette fin sur l'adaptateur (1) pour la communication avec l'appareil de commande (9).
